# EUROPEAN PATENT SPECIFICATION

(11) **EP 3 478 133 B1**
(45) Date of publication and mention of the grant of the patent: **07.06.2023**
(21) Application number: 17780986.0
(22) Date of filing: 29.06.2017
(51) Int. Cl.: F25D 3/08, A47G 19/02, F28D 20/02, F28D 20/00

(54) **POUCH FILLED WITH PHASE-CHANGE MATERIAL AND METHOD FOR MANUFACTURE THEREOF**
MIT PHASENWECHSELMATERIAL GEFÜLLTER BEUTEL UND VERFAHREN ZUR HERSTELLUNG DAVON
POCHE REMPLIE D'UN MATÉRIAU À CHANGEMENT DE PHASE ET SON PROCÉDÉ DE FABRICATION

(30) Priority: 30.06.2016 BE 201605527
(43) Date of publication of application: 08.05.2019
(73) Proprietor: Probalco BVBA, 8510 Kortrijk (BE)
(72) Inventor: REDJAL, Karim, 8550 Zwevegem (BE); SPELEERS, Pol, 8790 Waregem (BE)
(74) Representative: Van den Bosch, Remy
(86) International application number: PCT/BE2017/000033
(87) International publication number: WO 2018/000056

(56) References cited:
- EP-A1- 2 829 202
- WO-A1-95/08601
- US-A- 5 212 963
- US-A1- 2011 083 826
- US-A1- 2014 331 711

## Description

### Field of the invention

The present invention relates to a pouch filled with phase-change material and method for manufacturing a pouch filled with phase-change material. The present invention further relates to crockery provided with a pouch filled with phase-change material.

### Background

The use of phase-change material as heat storage material, wherein the phase-change material is able to absorb heat in a relatively short time and to relinquish this heat again over a longer period of time, is known. An example of such an application is the use of phase-change material in a plate on which hot food is served. By making use of phase-change material the plate will cool less quickly and the food will remain warm for longer. A cavity filled with phase-change material is typically provided in the plate.

Typical phase-change materials used for this and similar applications are solid at room temperature and transpose to a liquid phase at higher temperatures at which they absorb heat. When the phase-change material is in the liquid phase, there is the danger that particles of the phase-change material can escape through the micropores of the plate. In the liquid phase the phase-change material can moreover move freely in the cavity under the influence of movements of the plate, whereby the release of heat to the plate will decrease and whereby an irregular and/or varying distribution of weight of phase-change material will occur in the plate.

### Summary of the invention

Embodiments of the invention have the object of providing phase-change material in a manner such that a better absorption and release of heat is obtained compared to known applications of phase-change material as heat storage material.

A pouch according to the preamble of claim 1 is disclosed in the document US2011/83826A1.

A first aspect of the invention relates to a pouch with phase-change material, wherein the pouch is intended for placing against a wall to be heated or cooled, and wherein the pouch comprises a preformed first wall and a second wall. The first wall comprises a bowl-shaped part, in which the phase-change material is accommodated, and a peripheral part, wherein the second wall is attached to the peripheral part of the first wall. The pouch is filled with phase-change material and a high vacuum between 1×10⁻¹ Pa and 1×10⁻⁷ Pa prevails in the pouch.

By providing the phase-change material in a filled pouch the freedom of movement of the phase-change material is limited by the pouch. Because a high vacuum prevails in the pouch, wherein a pressure of between 1 × 10⁻¹ and 1 × 10⁻⁷ Pa prevails in the pouch, thermally insulating air is prevented from being able to lodge between the phase-change material and the walls of the pouch, or between different parts of the phase-change material. The phase-change material in the vacuum pouch is moreover protected from possible contaminants, protected against possible degradation of the phase-change material, and igniting of the phase-change material is avoided by the vacuum pouch. The high vacuum in the pouch can be achieved by providing a preformed first wall of the pouch with a bowl-shaped part and a peripheral part, so that the phase-change material can be placed in the bowl-shaped part, wherein the second wall is attached to the peripheral part of the first wall immediately after vacuum has been drawn in the pouch. The advantage of the preformed first wall with bowl-shaped part is that vacuum can be drawn in simple manner in the pouch and that a higher vacuum can be achieved when compared to the use of phase-change material between two flat walls. The first wall and second wall of the pouch can be attached to each other in different ways at the peripheral part of the first wall, such as by means of welding, glueing and so on.

In a preferred embodiment the pouch is elastic and flexible to an extent such that the pouch can also stretch when the phase-change material expands during transition from the one phase to the other, and such that the pouch becomes taut again when the phase-change material contracts during a reverse phase transition. In combination with the high vacuum in the pouch, the flexibility of the pouch provides for the largest and most efficient possible contact surface between the phase-change material in the pouch and the wall to be heated or cooled without the phase-change material being able to escape or move away from the wall. In a possible embodiment the walls of the pouch are not elastic, and the wall of the pouch remote from the wall to be heated or cooled has a surface area such that an expansion of the phase-change material is possible.

In a preferred embodiment of the pouch filled with phase-change material the first wall and the second wall are at least 40 µm thick, preferably between 50 µm and 150 µm thick. Walls of such thickness ensure that the pouch provides a high degree of protection and strength. Such wall thicknesses moreover allow preforming of the first and/or second wall of the pouch, and allow a bowl-shaped part to be provided in the first wall in which the phase-change material can be placed. It will be apparent to the skilled person that the first and second walls can have mutually differing thicknesses. The second wall in particular is preferably not too thick in order to guarantee a good heat transfer to the part to be heated or cooled.

In an exemplary embodiment of the pouch filled with phase-change material the first wall is a first film and the second wall is a second film. The first film and second film can have the same thickness, but can also have mutually differing thicknesses. Films have the advantage that they can be laminated in advantageous manner, whereby different material properties can be combined in one film. The bowl-shaped part in the first wall is preferably formed in the case of a film by thermoforming.

In an exemplary embodiment of the pouch filled with phase-change material the first wall and the second wall comprise a plurality of layers. The first wall and second wall can comprise the same layers, although the first and second walls can also comprise mutually differing layers. Depending on the intended use of the pouch, it may be useful for the material properties of the first wall to differ from the material properties of the second wall. It may thus be advantageous for instance to provide the wall of the pouch not intended for placing against the wall to be heated or cooled, and which is therefore remote from the wall to be heated or cooled, with an additional thermally insulating layer.

In a preferred embodiment of the pouch filled with phase-change material the first wall and the second wall comprise a welding layer and a barrier layer, wherein the welding layer of the first wall is welded to the welding layer of the second wall.

The barrier layer is selected such that it does not allow passage of molecules of the phase-change material, particularly at higher temperatures at which the phase-change material becomes liquid. The welding layer is selected such that it is weldable in simple manner, whereby the first wall and second wall can be welded to each other at the peripheral part of the first wall.

In an exemplary embodiment the welding layer comprises polypropylene and the barrier layer comprises polyamide.

In an exemplary embodiment of the pouch filled with phase-change material the first wall and/or second wall comprises a layer manufactured from aluminium.

In an exemplary embodiment of the flexible pouch filled with phase-change material the first wall and/or the second wall are injection-moulded pieces or part of one injection-moulded piece. These can for instance be manufactured from silicone.

In a preferred embodiment the pouch is intended for placing with the second wall against the wall to be heated or cooled, wherein the first wall has better thermally insulating properties than the second wall.

When the second wall is placed against the wall to be heated or cooled, it is advantageous that the second wall interferes as little as possible with the absorption and release of heat by the phase-change material, and so facilitates the exchange of heat as well as possible. Conversely, it is advantageous that the first wall, which is not located against the wall to be heated or cooled, allows the least possible loss of heat from the direction of the wall to be heated or cooled, and so is thermally insulated as well as possible.

In a preferred embodiment the pouch is filled with phase-change material not accommodated in capsules.

The use of phase-change material accommodated in micro- or macro-capsules is known. A higher heat capacity can however be obtained by making use of phase-change material not accommodated in capsules when compared to the same amount of material accommodated in capsules. This is because air is often present between the capsules, and this results in a thermally insulating effect. Phase-change material not accommodated in capsules can moreover be placed in simple manner in a pouch of appropriate form, whereby a more efficient contact surface can be obtained for heat exchange when compared to phase-change material accommodated in capsules.

In an exemplary embodiment of the pouch filled with phase-change material the second wall is a preformed wall. The second wall can for instance be adapted in advantageous manner to a shape of the wall to be heated or cooled, whereby the second wall can be placed in efficient manner against the wall to be heated or cooled. In the case of a coffee or tea cup the pouch with a preformed second wall can advantageously be arranged simultaneously against a bottom part of a part to be heated and against an upright side part of the part to be heated. It will be apparent to the skilled person that the same principle can be applied for any random shape of the wall to be heated or cooled, wherein the pouch has a preformed second wall with a corresponding shape in order to guarantee good contact between the second wall of the pouch and the wall to be heated or cooled.

The measures and advantages associated with the above described embodiments of the pouch filled with phase-change material according to the first aspect of the invention are likewise applicable to a piece of crockery provided with a flexible pouch filled with phase-change material and to a method for manufacturing a pouch filled with phase-change material in accordance with respectively a second and third aspect of the invention as described below.

Provided according to a second aspect of the invention is a piece of crockery which is provided with the pouch according to any of the above described embodiments, wherein the pouch is situated in the crockery and wherein the pouch is placed against a part of the crockery to be heated or cooled. The second wall is preferably arranged here against the part of the crockery to be heated or cooled, preferably crockery of ceramic material such as earthenware, chinaware or glass. In the case of a plate this plate can take a double-walled form with an upper wall to be heated or cooled, and a lower wall. The pouch is then preferably arranged between the lower wall and the upper wall, wherein the second wall is arranged against the upper wall to be heated or cooled, while the first wall is located at a distance from the lower wall such that it is not heated, or hardly so.

A third aspect of the invention relates to a method for manufacturing a pouch according to the first aspect of the invention, wherein the method comprises the steps of;
- shaping a first wall of the pouch such that the first wall comprises a bowl-shaped part and a peripheral part;
- placing the phase-change material in the bowl-shaped part of the shaped first wall;
- attaching a second wall of the pouch to the peripheral part of the shaped first wall such that the phase-change material is situated between the first and second walls, and that a high vacuum prevails in the pouch.

Providing the first wall with a bowl-shaped part enables easy arrangement of the phase-change material in the bowl-shaped part, wherein the second wall can then be placed as a cover connecting to the first wall. This allows sealing of the whole in simple and reliable manner.

According to an exemplary embodiment of the method for manufacturing a pouch filled with phase-change material, the shaping of the first wall of the pouch comprises the step of thermally preforming the first wall of the pouch. The first wall can for instance then be a film which is thermally preformed.

In an alternative embodiment the shaping of the first wall of the pouch comprises the step of preforming the first wall of the pouch in a mould by means of underpressure.

According to an alternative exemplary embodiment, the shaping of the first wall comprises the step of injection moulding the first wall.

According to a preferred embodiment of the method for manufacturing a pouch filled with phase-change material, attaching the second wall to the peripheral part of the shaped first wall comprises the following steps of

positioning the first and second wall relative to each other such that the second wall is attachable at the peripheral part of the first wall;
drawing a vacuum in the space between the first wall and the second wall; and sealing the pouch at the peripheral part of the first wall.

Providing the first wall with a bowl-shaped part enables the phase-change material to be arranged easily in the bowl-shaped part, wherein the second wall can then be placed as a cover connecting to the first wall. This allows a vacuum to be drawn in simple and reliable manner in the whole entity.

According to an exemplary embodiment, sealing of the pouch at the peripheral part of the first wall . comprises the step of welding or glueing the second wall to the peripheral part of the first wall.

According to an exemplary embodiment, placing of the phase-change material in the bowl-shaped part of the shaped first wall comprises the steps of melting the phase-change material, casting the molten phase-change material in a mould and, after cooling, placing the hardened phase-change material in the bowl-shaped part. This simplifies creation of a vacuum in the space between the first and second walls.

According to an exemplary embodiment, the method for manufacturing a pouch filled with phase-change material comprises the step of shaping the second wall of the pouch prior to the attachment. The second wall can in this way be given a shape which is adapted to the shape of the part against which the second wall must be placed.

According to an exemplary embodiment, the shaping of the second wall comprises the step of injection moulding the second wall or thermally preforming the second wall.

In an alternative embodiment the shaping of the second wall of the pouch comprises the step of preforming the second wall of the pouch in a mould by means of underpressure.

### Brief description of the figures

The above stated and other advantageous properties and objectives of the invention will become more apparent, and the invention better understood, on the basis of the following detailed description when read in combination with the accompanying drawings, in which:
Figure 1 shows a cross-section of an exemplary embodiment of a pouch filled with phase-change material according to the invention;
Figure 2 shows a cross-section of an exemplary embodiment of a pouch filled with phase-change material according to the invention, wherein the first and second wall comprise a plurality of layers;
Figure 3 shows a cross-section of an alternative embodiment of a pouch filled with phase-change i material according to the invention, wherein the first wall of the pouch has better thermally insulating properties than the second wall of the pouch;
Figure 4 shows a cross-section of an exemplary embodiment of a pouch filled with phase-change material according to the invention, wherein the second wall of the pouch is a preformed wall; Figures 5A and 5B show respective simplified views of exemplary embodiments of a piece of crockery provided with a pouch filled with phase-change material; and
Figure 6 shows a schematic overview of an embodiment of a method for manufacturing a pouch filled with phase-change material according to the invention; and
Figures 7A, 7B, 7C and 7D illustrate schematically the steps of a more detailed embodiment of a method for manufacturing a pouch filled with phase-change material.

### Detailed embodiments

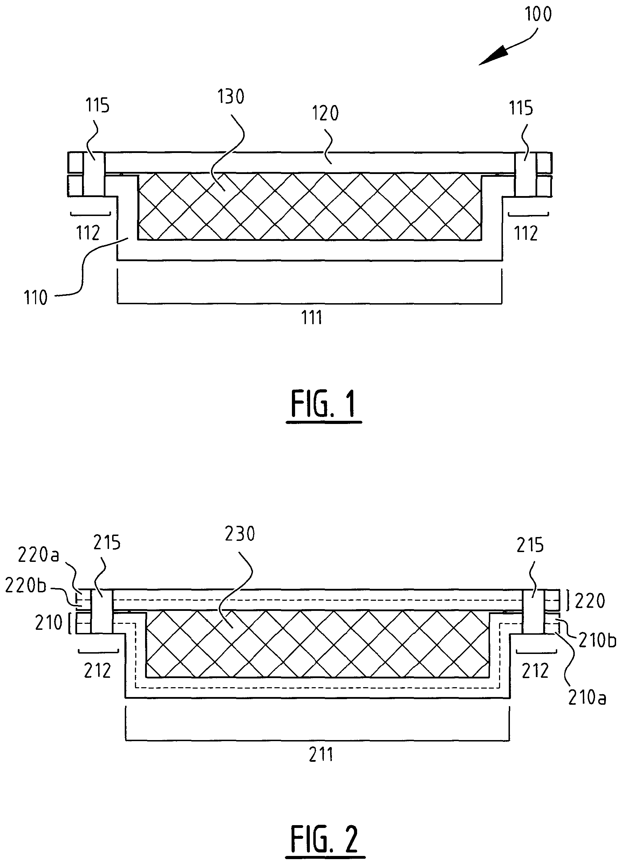

A first embodiment of a pouch filled with phase-change material according to the invention is illustrated in Figure 1. This is a pouch 100 filled with phase-change material 130, wherein pouch 100 comprises a preformed first wall 110 and a second wall 120. The first wall comprises a bowl-shaped part 111, in which the phase-change material 130 is accommodated, and a peripheral part 112, wherein second wall 120 is attached to peripheral part 112 of first wall 110. Bowl-shaped part 111 is shown schematically and as being angular in the figures, although it will be apparent to the skilled person that in practical embodiments bowl-shaped part 111 can be "rounder". The attachment location is indicated in simplified manner in Figure 1 with strips 115 at peripheral part 112 of first wall 110. First wall 110 and second wall 120 can be attached to each other in different ways. Walls 110,120 can be welded, glued, clamped etc. to each other. A high vacuum prevails in pouch 100, and pouch 100 is intended for placing against a wall to be heated or cooled. At high vacuum a pressure of between 1 × 10⁻¹ and 1 × 10⁻⁷ Pa prevails in the pouch. The phase-change material used can be any known phase-change material and, depending on the intended use, a specific phase-change material can be preferred to another phase-change material. A phase-change material can thus be selected for instance on the basis of the melting point thereof, since a higher or lower melting point can be advantageous for optimum heating or cooling of liquids or foods. Organic phase-change materials on the basis of paraffins are particularly suitable for use in a pouch 100 filled with phase-change material 130 according to embodiments of the invention.

Pouch 100 is preferably filled with phase-change material 130 not accommodated in capsules. Non-encapsulated phase-change materials, or so-called pure phase-change materials, can for instance be obtained by melting phase-change material in granular form to a desired shape. Although the use of phase-change material 130 accommodated in micro- or macro-capsules is known, this is disadvantageous because a thermally insulating air layer may be present between the capsules. By making use of phase-change material 130 not accommodated in capsules, a higher heat capacity can as a result be obtained when compared to the same amount of phase-change material accommodated in capsules. Phase-change material 130 not accommodated in capsules can moreover be placed in simple manner in a suitable form in a pouch, whereby a more efficient contact surface can be obtained for heat exchange between the pouch and the wall to be heated or cooled when compared to phase-change material accommodated in capsules.

Walls 110, 120 of pouch 100 can comprise different materials just as long as the walls 110, 120 can keep the phase-change material 130 contained. The freedom of movement of phase-change material 130 is thus limited by pouch 100. The pouch is preferably elastic and flexible to an extent such that pouch 100 can also stretch when phase-change material 130 expands at the transition from the solid phase to the liquid phase, and such that pouch 100 becomes taut again when phase-change material 130 contracts during a reverse phase change.

In a preferred embodiment of pouch 100 filled with phase-change material 130 the first wall 110 and second wall 120 are at least 40 µm thick, preferably between 50 µm and 150 µm thick. Walls 110, 120 of such thickness ensure that pouch 100 provides a high degree of protection and strength and/or that pouch 100 is sufficiently flexible. Such wall thicknesses moreover allow thermal, preforming of first 110 and/or second wall 120 of the pouch and allow a bowl-shaped part 111 to be provided in first wall 110 in which phase-change material 130 can be placed. The first 110 and second wall 120 can have mutually differing thicknesses.

It is noted that Figure 1 is not drawn to scale. In a typical embodiment the bowl-shaped part 111 will have a depth d of between 1 mm and 20 mm, while the dimension a of the bottom of bowl-shaped part 111 can be many times larger and is typically adapted to the piece of crockery for which the pouch is intended. For a large plate the dimension a can for instance lie between 25 cm and 40 cm.

In an exemplary embodiment of pouch 100 filled with phase-change material 130 the first wall 110 is a first film and second wall 120 is a second film. The first film and second film can have the same thickness but can also have mutually differing thicknesses. When first wall 110 is a film, first wall 110 can be preformed by means of thermal preforming such that first wall 110 comprises a bowl-shaped part 111 and peripheral part 112. Films have the advantage that they can be laminated in advantageous manner, whereby different material properties can be combined in one film. Embodiments of the pouch filled with phase-change material 130, wherein the walls or films 110, 120 comprise different layers, will be discussed in more detail with reference to Figure 2.

The preformed first wall 110 and/or second wall 120 of pouch 100 need not be films, but can for instance also be injection-moulded pieces. First wall 110 can for instance be injection moulded in a specific form such that first wall 110 comprises a bowl-shaped part 111 and a peripheral part 112. The first and/or second wall 110, 120 of pouch 100 can thus consist for instance of injection-moulded silicone or other plastics.

Figure 2 illustrates an exemplary embodiment of pouch 200 filled with phase-change material 230, wherein first wall 210 and second wall 220 comprise a plurality of layers 210a, 210b, 220a, 220b. The layers within the same wall are separated from each other in Figure 2 by means of a broken line. First wall 210 and second wall 220 can comprise the same material layers, although the first and second walls can also comprise mutually differing material layers 210a, 210b, 220a, 220b. Depending on the intended use of pouch 200, it may be useful for the material properties of first wall 210 to differ from the material properties of second wall 220. It may thus be advantageous for instance to provide the wall of pouch 200 not intended for placing against the wall to be heated or cooled, and which is therefore remote from the wall for heating or cooling, with an additional thermally insulating layer.

In a preferred embodiment of pouch 200 filled with phase-change material 230 the first wall 210 and second wall 210 comprise a welding layer 210b, 220b and a barrier layer 210a, 220a, wherein welding layer 210b of first wall 210 is welded to welding layer 220b of second wall 220. Barrier layer 210a, 220a is selected such that it does not allow passage of molecules of phase-change material 230, particularly at higher temperatures at which phase-change material 230 becomes liquid. Welding layer 210b, 220b is selected such that it is weldable in simple manner, whereby first wall 210 and second wall 220 can be welded to each other at peripheral part 212 of the first wall. A material which is particularly suitable as welding layer 210b, 220b because of its high weldability is polypropylene. A material which is particularly suitable as barrier layer 210a, 220a, because of the low permeability in respect of phase-change material and the high resistance at high temperatures, is polyamide. According to a preferred embodiment, the combined thickness of welding layer 210b, 220b and barrier layer 210a, 220a lies between 60 µm and 100 µm per wall 210, 220. At a thickness within this interval the walls 210, 220 display high resistance to cutting. This is advantageous for instance when pouch 200 is used in a piece of crockery, such as a plate, wherein the high resistance to cutting provides protection against for instance fragments of the plate if the plate were to break, and ensures that phase-change material 230 remains intact in pouch 200.

In an exemplary embodiment of pouch 200 filled with phase-change material 230 the first wall 210 and/or second wall 220 comprises a layer manufactured from aluminium. A pouch can for instance thus be formed in advantageous manner which consists of a welding layer, for instance of polypropylene, laminated with an aluminium foil. The aluminium foil ensures that the pouch is substantially impermeable to molecules.

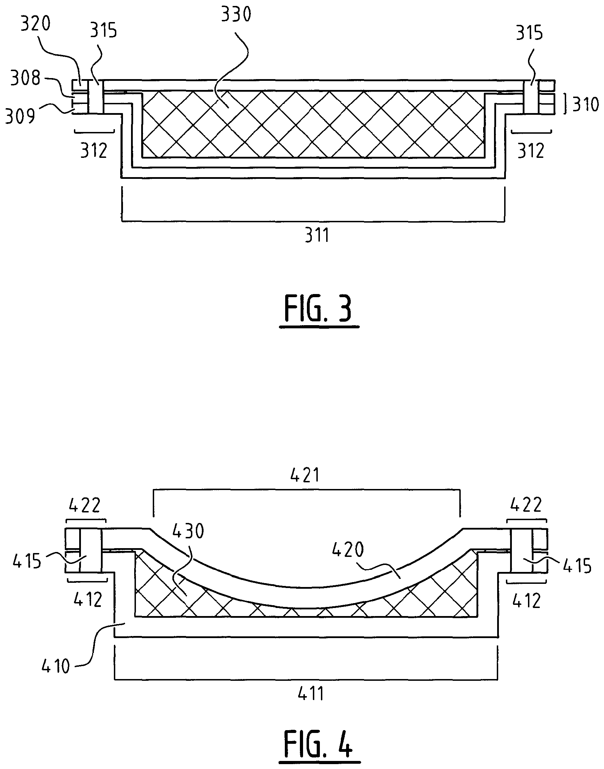

Figure 3 illustrates a preferred embodiment of pouch 300 filled with phase-change material 330, wherein pouch 300 is intended to be placed with second wall 320 against the wall to be heated or cooled, wherein first wall 310 has better thermally insulating properties than second wall 320. When second wall 320 is placed against the wall to be heated or cooled, it is advantageous that second wall 320 interferes as little as possible with the absorption and release of heat by phase-change material 330, and so facilitates the exchange of heat as well as possible. Conversely, it is advantageous that first wall 310, which is not located against the wall to be heated or cooled, allows the least possible loss of heat from the direction of the wall to be heated or cooled, and so is thermally insulated as well as possible. Figure 3 shows by way of example that first wall 310 has two layers 308, 309. Layer 308 corresponds for instance to one of the above mentioned layers or materials, wherein layer 309 can be an extra thermally insulating layer. It will be apparent to the skilled person that the first wall can also consist of a plurality of layers or of only one layer, wherein first wall 310 has better thermally insulating properties than second wall 320.

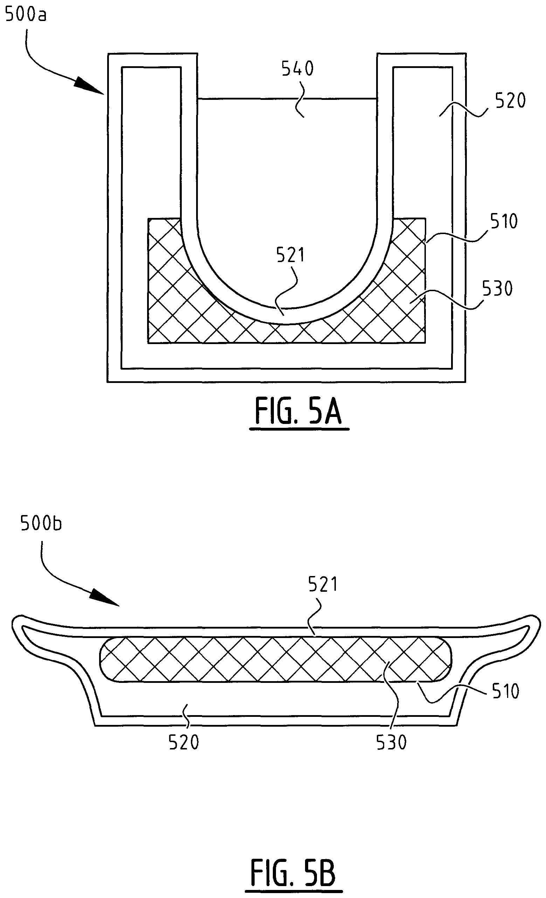

Figure 4 illustrates an exemplary embodiment of pouch 400 filled with phase-change material 430 wherein second wall 420 is a preformed wall. The second wall can for instance be adapted in advantageous manner to a shape of the wall to be heated or cooled, whereby second wall 420 can be placed in efficient manner against the wall to be heated or cooled. In the shown exemplary embodiment second wall 420 is formed in the shape of a dish. This shape can be advantageous for placing second wall 420 in efficient manner against a bottom wall part of a cup or mug to be heated or cooled as shown in simplified manner in Figure 5A. The preformed second wall 420 can however also have other shapes depending on the intended use. It will be apparent to the skilled person that the same principle can be applied for any shape of the wall to be heated or cooled, wherein the pouch has a preformed second wall with a corresponding shape in order to guarantee good contact between the second wall of the pouch and the wall to be heated or cooled. When second wall 320 is not preformed, but is a flat wall as shown in Figure 3, the pouch is for instance particularly suitable for placing with second wall 320 against the flat or plane wall of a plate or oven dish, as shown in simplified manner in Figure 5B. It will be apparent to the skilled person that the illustrated shapes of the preformed first wall 110, 210, 310, 410 and/or preformed second wall 420 are examples, and that the preformed first wall 110, 210, 310, 410 and preformed wall 420 can also have other shapes. The preformed first wall 110, 210, 310, 410 makes it possible to obtain a high vacuum in pouch 100, 200, 300, 400.

Figures 5A and 5B illustrate exemplary embodiments of a piece of crockery 500a, 500b provided with a pouch 510 filled with phase-change material 530 as according to any of the foregoing embodiments, wherein pouch 510 is situated in the crockery 500a, 500b and wherein pouch 510 is placed against a wall 521 to be heated or cooled of the crockery 500a, 500b. Figures 5A and 5B are simplified representations and illustrate the use of pouch 510 in a piece of crockery 500a, 500b.

Figure 5A shows particularly a cup or mug 500a intended as recipient for hot or cold beverages 540. Cup 500a is double-walled and a pouch 510 filled with phase-change material 530 is provided in the space between the two walls. The wall 521 of cup 500a to be heated or cooled is situated between pouch 510 and beverage 540. The pouch 510 shown in Figure 5A corresponds to the embodiment shown in Figure 4, wherein second wall 420 is preformed. Because of the preformed second wall 420 pouch 510 can be placed in fitting manner against wall 521 to be heated or cooled so that pouch 510 makes contact not only with the bottom but also at least a part of the upright inner wall of the cup. Not only does pouch 510 filled with phase-change material 530 hereby release heat via the bottom of wall 521 to be heated, but also along the upright sides thereof, whereby the hot beverage 540 can remain hot for longer.

Figure 5B shows in particular a plate 500b which has a wall 521 to be heated or cooled which is intended for serving or presenting foods. Plate 500b is double-walled and a pouch 510 filled with phase-change material 530 is provided in the space 520 between the two walls of the plate. Pouch 510 is thus situated at the inner side of the wall 521 of plate 500b to be heated or cooled. Pouch 510 shown in Figure 5B corresponds to an embodiment wherein second wall 120, 220, 230 is flat as shown in Figure 1, 2 or 3.

Although Figures 5A and 5B show only a cup 500a and a plate 500b provided with a pouch 510 filled with phase-change material 530 with a preformed first wall, it will be apparent to the skilled person that the principle of the invention can be applied to diverse types of crockery with a wall to be heated or cooled, such as oven dishes, cups, dessert plates, soup bowls, dessert coupes, pizza plates, spoons and so on. A pouch 510 filled with phase-change material 530 with a preformed first wall according to the invention can also be used for other applications where a wall has to be cooled or heated, such as in the case of baths or swimming pools and the like.

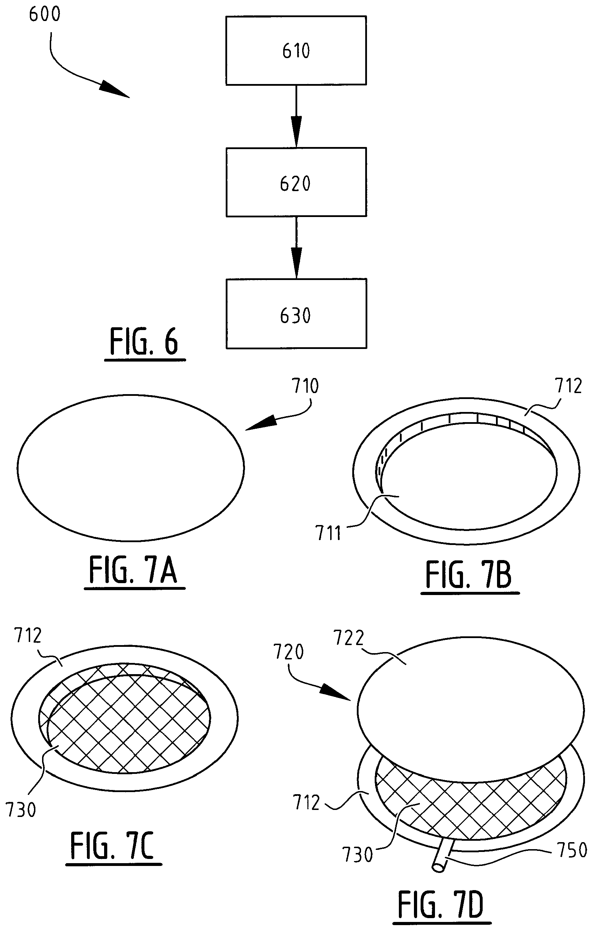

Figure 6 shows a flow chart of a method 600 for manufacturing a pouch filled with phase-change material according to the invention, wherein the method 600 comprises the following steps of:
- step 610 of shaping a first wall of the pouch such that the first wall comprises a bowl-shaped part and a peripheral part;
- step 620 of placing the phase-change material in the bowl-shaped part of the shaped first wall;
- step 630 of attaching a second wall of the pouch to the peripheral part of the shaped first wall such that the phase-change material is situated between the first and second walls and that a high vacuum prevails in the pouch.

Shaping of the first wall can take place in different ways. According to an exemplary embodiment of the method 600 for manufacturing a pouch filled with phase-change material, step 610 of shaping the first wall of the pouch comprises of thermal preforming of the first wall of the pouch. When the first wall is a film, it can particularly be shaped by means of thermal preforming. The preformed first wall can have different shapes. Depending on the intended use of the pouch, a specific shape can be preferred to another shape. The dimensions can further be adapted to the intended use. An alternative manner of shaping the first wall is by injection moulding of the first wall. A first wall can for instance thus be injection moulded in silicone or other suitable plastic.

According to an exemplary embodiment, step 620 of method 600 comprises of melting the phase-change material, casting the molten phase-change material in a mould and, following cooling, placing the phase-change material in the bowl-shaped part, for instance phase-change material which has hardened in the form of a disc. First melting for instance granulates of phase-change material enables the phase-change material to be brought into a desired shape by casting the molten phase-change material in a mould as desired. Following cooling, the shaped phase-change material can then be placed in the bowl-shaped part of the first wall, and the phase-change material can be packed under high vacuum between the first and second wall of the pouch.

According to a preferred embodiment, step 630 of method 600 comprises the following steps. During a first step the first and second walls are positioned relative to each other such that the second wall can be attached at the peripheral part of the first wall. When the first and second walls are in position for attachment, a vacuum is drawn in the space between the first wall and the second wall and, substantially instantaneously after applying the vacuum, the pouch is sealed at the peripheral part of the first wall. Drawing a vacuum in the space between the first and second walls takes place for instance by providing tubes between the first and second walls, by means of which vacuum is drawn in the space. It will however be apparent to the skilled person that alternative ways can be employed to draw a vacuum in the pouch.

The sealing of the pouch at the peripheral part of the first wall can also take place in different ways. According to an embodiment, the pouch is sealed by welding the second wall to the first wall at the peripheral part of the first wall. According to an alternative embodiment, the pouch is sealed by glueing the second wall to the first wall at the peripheral part of the first wall. It will be apparent to the skilled person that other ways can be employed to seal the pouch.

According to an exemplary embodiment, the method 600 for manufacturing a pouch filled with phase-change material comprises of shaping the second wall of the pouch prior to attachment. Shaping of the second wall can take place in different ways. According to an exemplary embodiment, shaping of the second wall of the pouch comprises of thermally preforming the second wall of the pouch. When the second wall is a film, it can particularly be shaped by means of thermal preforming. The preformed second wall can have different shapes. Depending on the intended use of the pouch, a specific shape can be preferred to another shape. An alternative manner of shaping the second wall is by injection moulding the second wall. A second wall can for instance thus be injection moulded in silicone or other suitable plastic.

Figures 7A, 7B, 7C and 7D illustrate schematically the steps of a more detailed embodiment of a method for manufacturing a pouch filled with phase-change material. In a first step (Figure 7A) a first wall is provided in the form of a round first film 710. In a second step (Figure 7B) first film 710 is thermally preformed such that the first wall comprises a bowl-shaped part 712 and a peripheral part 711. In a third step (Figure 7C) a phase-change material 730, here in the form of a preformed disc, is placed in bowl-shaped part 712 of the shaped first film 710. The shape and dimensions of preformed disc 730 preferably substantially correspond to the shape and dimensions of bowl-shaped part 712. In a fourth step (Figure 7D) a second round film 720 is placed as a cover on first film 710 with interposing of a tube 750 for the purpose of drawing a vacuum in the space between first film 710 and second film 720. Peripheral part 712 of the shaped first film 710 is welded against a peripheral part 722 of second film 720 in order to form the pouch, while tube 750 is retracted.

The skilled person will appreciate that the invention is not limited to the above described embodiments, and that many modifications and variants are possible within the scope of the invention, which is defined solely by the following claims.

## Claims

1. A pouch (100) with phase-change material (130), wherein the pouch is intended for placing against a wall to be heated or cooled, and wherein the pouch (100) comprises a preformed first wall (110) and a second wall (120), wherein the first wall (110) comprises a bowl-shaped part, in which the phase-change material (130) is accommodated, and a peripheral part, wherein the second (120) wall is attached to the peripheral part of the first wall (110), **characterised in that**
the pouch (100) is filled with phase-change material (130) and that a high vacuum between 1×10⁻¹ Pa and 1×10⁻⁷ Pa prevails in the pouch (100).

2. The pouch (100) as claimed in claim 1, wherein the first wall (110) and second wall (120) are at least 40 µm thick and preferably between 50 µm and 150 µm thick.

3. The pouch (100) as claimed in claim 1 or 2, wherein the first wall (110) is a first film and the second wall (120) is a second film.

4. The pouch (100) as claimed in the foregoing claim, wherein the bowl-shaped part of the first wall (110) is formed by thermoforming the first film.

5. The pouch (100) as claimed in any of the foregoing claims, wherein the first wall (110) and second wall (120) each comprise a welding layer and a barrier layer, wherein the welding layer of the first wall (110) is welded to the welding layer of the second wall (120); and/or
wherein the welding layer comprises polypropylene and the barrier layer comprises polyamide.

6. The pouch (100) as claimed in any of the foregoing claims, wherein the first wall (110) and/or the second wall (120) comprises a layer manufactured from aluminium.

7. The pouch (100) as claimed in claim 1 or 2, wherein the first wall (110) and/or the second wall (120) are manufactured by injection moulding.

8. The pouch (100) as claimed in any of the foregoing claims, wherein the pouch (100) is intended for placing with the second wall (120) against a part to be heated or cooled, and wherein the first wall (110) has better thermally insulating properties than the second wall (120); and/or
wherein the pouch (110) is filled with phase-change material (130) not accommodated in capsules.

9. The pouch (100) as claimed in any of the foregoing claims, wherein the second wall (120) is a preformed wall.

10. A piece of crockery provided with a pouch (100) as claimed in any of the foregoing claims, wherein the pouch (100) is situated in the crockery and wherein the pouch (100) is placed with the second wall (120) against a wall of the crockery to be heated or cooled.

11. A method (600) for manufacturing a pouch according to any of claims 1 - 9, wherein the method comprises the steps of:
- shaping (610) a first wall of the pouch such that the first wall comprises a bowl-shaped part and a peripheral part;
- placing (620) the phase-change material in the bowl-shaped part of the shaped first wall;
- attaching (630) a second wall of the pouch to the peripheral part of the shaped first wall such that the phase-change material is situated between the first and second walls, and that a high vacuum prevails in the pouch.

12. The method (600) as claimed in claim 11, wherein the shaping (610) of the first wall of the pouch comprises of thermally preforming the first wall of the pouch; and/or
wherein the shaping (610) of the first wall comprises of injection moulding the first wall.

13. The method (600) as claimed in any of the foregoing claims 11 to 12, wherein attaching (630) the second wall to the peripheral part of the shaped first wall comprises the steps of:
positioning the first and second wall relative to each other such that the second wall is attachable at the peripheral part of the first wall;
drawing a vacuum in the space between the first wall and the second wall; and
sealing the pouch at the peripheral part of the first wall; and/or
wherein sealing of the pouch at the peripheral part of the first wall comprises of welding or glueing the second wall to the peripheral part of the first wall.

14. The method (600) as claimed in any of the foregoing claims 11 to 13, wherein placing (620) of the phase-change material in the bowl-shaped part of the shaped first wall comprises of melting the phase-change material, casting the molten phase-change material in a mould and, after cooling, placing the hardened phase-change material in the bowl-shaped part.

15. The method (600) as claimed in any of the foregoing claims 11 to 14, further comprising the step of shaping the second wall of the pouch prior to the attachment; and/or
wherein the shaping of the second wall comprises the step of injection moulding the second wall or thermally preforming the second wall.

## Patentansprüche

1. Ein Beutel (100) mit Phasenwechselmaterial (130), wobei der Beutel dazu bestimmt ist, an einer zu wärmenden oder zu kühlenden Wand angebracht zu werden, und wobei der Beutel (100) eine vorgeformte erste Wand (110) und eine zweite Wand (120) aufweist, wobei die erste Wand (110) einen schalenförmigen Teil, in dem das Phasenwechselmaterial (130) untergebracht ist, und einen Umfangsteil umfasst, wobei die zweite Wand (120) an dem peripheren Teil der ersten Wand (110) befestigt ist,
**dadurch gekennzeichnet, dass**
der Beutel (100) mit Phasenwechselmaterial (130) gefüllt ist und dass in dem Beutel (100) ein Hochvakuum zwischen 1×10⁻¹ Pa und 1×10⁻⁷ Pa herrscht.

2. Der Beutel (100) nach Anspruch 1, wobei die erste Wand (110) und die zweite Wand (120) mindestens 40 µm und vorzugsweise zwischen 50 µm und 150 µm dick sind.

3. Der Beutel (100) nach Anspruch 1 oder 2, wobei die erste Wand (110) eine erste Folie und die zweite Wand (120) eine zweite Folie darstellt.

4. Der Beutel (100) nach dem vorherigen Anspruch, wobei der schalenförmige Teil der ersten Wand (110) durch Thermoformen der ersten Folie gebildet wird.

5. Der Beutel (100) nach einem der vorherigen Ansprüche, wobei die erste Wand (110) und die zweite Wand (120) jeweils eine Schweißschicht und eine Sperrschicht aufweisen, wobei die Schweißschicht der ersten Wand (110) mit der Schweißschicht der zweiten Wand (120) verschweißt ist, und/oder wobei die Schweißschicht Polypropylen und die Sperrschicht Polyamid aufweist.

6. Der Beutel (100) nach einem der vorherigen Ansprüche, wobei die erste Wand (110) und/oder die zweite Wand (120) eine aus Aluminium gefertigte Schicht aufweist.

7. Der Beutel (100) nach Anspruch 1 oder 2, wobei die erste Wand (110) und/oder die zweite Wand (120) durch Spritzgießen gefertigt sind.

8. Der Beutel (100) nach einem der vorherigen Ansprüche, wobei der Beutel (100) dazu bestimmt ist, mit der zweiten Wand (120) an einem zu wärmenden oder zu kühlenden Teil angebracht zu werden, und wobei die erste Wand (110) bessere thermische Isoliereigenschaften als die zweite Wand (120) aufweist; und/oder
wobei der Beutel (110) mit Phasenwechselmaterial (130) gefüllt ist, welches nicht in Kapseln aufgenommen ist.

9. Der Beutel (100) nach einem der vorherigen Ansprüche, wobei die zweite Wand (120) eine vorgeformte Wand ist.

10. Ein Geschirrteil mit einem Beutel (100) nach einem der vorherigen Ansprüche, wobei der Beutel (100) in dem Geschirrteil angeordnet ist, und wobei der Beutel (100) mit der zweiten Wand (120) gegen eine Wand des zu wärmenden oder zu kühlenden Geschirrteils platziert wird.

11. Ein Verfahren (600) zur Herstellung eines Beutels nach einem der Ansprüche 1 bis 9, wobei das Verfahren die folgenden Schritte aufweist:
- Formen (610) einer ersten Wand des Beutels, so dass die erste Wand einen schalenförmigen Teil und einen Umfangsteil umfasst;
- Einbringen (620) des Phasenwechselmaterials in den schalenförmigen Teil der geformten ersten Wand;
- Anbringen (630) einer zweiten Wand des Beutels an dem Umfangsteil der geformten ersten Wand, so dass sich zwischen der ersten und der zweiten Wand das Phasenwechselmaterial befindet, und dass in dem Beutel Hochvakuum herrscht.

12. Das Verfahren (600) nach Anspruch 11, wobei das Formen (610) der ersten Wand des Beutels das thermische Vorformen der ersten Wand des Beutels umfasst; und/oder
wobei das Formen (610) der ersten Wand das Spritzgießen der ersten Wand umfasst.

13. Das Verfahren (600) nach einem der vorherigen Ansprüche 11 bis 12, wobei das Anbringen (630) der zweiten Wand an dem Umfangsteil der geformten ersten Wand die folgenden Schritte aufweist:
- Positionieren der ersten und zweiten Wand relativ zueinander, so dass die zweite Wand an dem Umfangsteil der ersten Wand anbringbar ist;
- Erzeugen eines Vakuums in dem Raum zwischen der ersten Wand und der zweiten Wand; und
- Abdichten des Beutels an dem Umfangsteil der ersten Wand, und/oder
wobei das Abdichten des Beutels am Umfangsteil der ersten Wand das Verschweißen oder Verkleben der zweiten Wand mit dem Umfangsteil der ersten Wand umfasst.

14. Das Verfahren (600) nach einem der vorherigen Ansprüche 11 bis 13, wobei das Einbringen (620) des Phasenwechselmaterials in den schalenförmigen Teil der geformten ersten Wand das Schmelzen des Phasenwechselmaterials, das Gießen des geschmolzenen Phasenwechselmaterials in eine Form und nach dem Abkühlen das Einbringen des gehärteten Phasenwechselmaterials in den schalenförmigen Teil umfasst.

15. Das Verfahren (600) nach einem der vorherigen Ansprüche 11 bis 14, ferner aufweisend den Schritt des Formens der zweiten Wand des Beutels vor dem Anbringen, und/oder
wobei das Formen der zweiten Wand den Schritt des Spritzgießens der zweiten Wand oder der thermischen Vorformung der zweiten Wand umfasst.

## Revendications

1. Poche (100) avec un matériau à changement de phase (130), dans laquelle la poche est destinée à être placée contre une paroi à chauffer ou à refroidir, et dans laquelle la poche (100) comprend une première paroi (110) préformée et une deuxième paroi (120), dans laquelle la première paroi (110) comprend une partie en forme de bol dans laquelle le matériau à changement de phase (130) est reçu, et une partie périphérique dans laquelle la deuxième paroi (120) est fixée à la partie périphérique de la première paroi (110), **caractérisée en ce que** la poche (100) est remplie d'un matériau à changement de phase (130) et **en ce qu'**un vide poussé entre 1×10⁻¹ Pa et 1×10⁻⁷ Pa règne dans la poche (100).

2. Poche (100) selon la revendication 1, dans laquelle la première paroi (110) et la deuxième paroi (120) ont une épaisseur d'au moins 40 µm et de préférence une épaisseur au moins entre 50 µm et 150 µm.

3. Poche (100) selon la revendication 1 ou 2, dans laquelle la première paroi (110) est un premier film et la deuxième paroi (120) est un deuxième film.

4. Poche (100) selon la revendication précédente, dans laquelle la partie en forme de bol de la première paroi (110) est formée par thermoformage du premier film.

5. Poche (100) selon l'une quelconque des revendications précédentes, dans laquelle la première paroi (110) et la deuxième paroi (120) comprennent chacune une couche de soudure et une couche barrière, dans laquelle la couche de soudure de la première paroi (110) est soudée à la couche de soudure de la deuxième paroi (120) ; et/ou
dans laquelle la couche de soudure comprend le polypropylène et la couche barrière comprend un polyamide.

6. Poche (100) selon l'une quelconque des revendications précédentes, dans laquelle la première paroi (110) et/ou la deuxième paroi (120) comprend une couche fabriquée en aluminium.

7. Poche (100) selon la revendication 1 ou 2, dans laquelle la première paroi (110) et/ou la deuxième paroi (120) sont fabriquées par moulage par injection.

8. Poche (100) selon l'une quelconque des revendications précédentes, dans laquelle la poche (100) est destinée à être placée avec la deuxième paroi (120) contre une partie à chauffer ou à refroidir, et dans laquelle la première paroi (110) a de meilleures propriétés d'isolation thermique que la deuxième paroi (120) ; et/ou
dans laquelle la poche (110) est remplie d'un matériau à changement de phase (130) non reçu dans des capsules.

9. Poche (100) selon l'une quelconque des revendications précédentes, dans laquelle la deuxième paroi (120) est une paroi préformée.

10. Pièce de vaisselle dotée d'une poche (100) selon l'une quelconque des revendications précédentes, dans laquelle la poche (100) est située dans la vaisselle et dans laquelle la poche (100) est placée avec la deuxième paroi (120) contre une paroi de la vaisselle à chauffer ou à refroidir.

11. Procédé (600) de fabrication d'une poche selon l'une quelconque des revendications 1 à 9, dans lequel le procédé comprend les étapes consistant à :
- façonner (610) une première paroi de la poche de sorte que la première paroi comprenne une partie en forme de bol et une partie périphérique ;
- placer (620) le matériau à changement de phase dans la partie en forme de bol de la première paroi façonnée ;
- fixer (630) une deuxième paroi de la poche à la partie périphérique de la première paroi façonnée de sorte que le matériau à changement de phase soit situé entre les première et deuxième parois, et qu'un vide poussé règne dans la poche.

12. Procédé (600) selon la revendication 11, dans lequel le façonnage (610) de la première paroi de la poche comprend le préformage thermique de la première paroi de la poche ; et/ou
dans lequel le façonnage (610) de la première paroi comprend le moulage par injection de la première paroi.

13. Procédé (600) selon l'une quelconque des revendications précédentes 11 à 12, dans lequel la fixation (630) de la deuxième paroi à la partie périphérique de la première paroi façonnée comprend les étapes consistant à :
positionner les première et deuxième parois l'une par rapport à l'autre de sorte que la deuxième paroi puisse être fixée à la partie périphérique de la première paroi ;
créer un vide par tirage dans l'espace entre la première paroi et la deuxième paroi ; et
sceller la poche au niveau de la partie périphérique de la première paroi ; et/ou
dans lequel le scellement de la poche au niveau de la partie périphérique de la première paroi comprend le soudage ou le collage de la deuxième paroi à la partie périphérique de la première paroi.

14. Procédé (600) selon l'une quelconque des revendications précédentes 11 à 13, dans lequel le placement (620) du matériau à changement de phase dans la partie en forme de bol de la première paroi façonnée comprend la fusion du matériau à changement de phase, la coulée du matériau à changement de phase fondu dans un moule et après refroidissement, le placement du matériau à changement de phase durci dans la partie en forme de bol.

15. Procédé (600) selon l'une quelconque des revendications précédentes 11 à 14, comprenant en outre l'étape consistant à façonner la deuxième paroi de la poche avant la fixation ; et/ou
dans lequel le façonnage de la deuxième paroi comprend l'étape consistant à réaliser un moulage par injection de la deuxième paroi ou un préformage thermique de la deuxième paroi.
